# EUROPÄISCHE PATENTSCHRIFT

(11) **EP 1 516 779 B1**
(45) Veröffentlichungstag und Bekanntmachung des Hinweises auf die Patenterteilung: **24.03.2010**
(21) Anmeldenummer: 04020714.4
(22) Anmeldetag: 01.09.2004
(51) Int. Cl.: B60P 1/44

(54) **Ladevorrichtung für ein Transportfahrzeug und entsprechendes Transportfahrzeug**
Loading device for a vehicle and corresponding vehicle
Dispositif de charge pour un véhicule et véhicule correspondant

(30) Priorität: 19.09.2003 DE 10343401
(43) Veröffentlichungstag der Anmeldung: 23.03.2005
(73) Patentinhaber: Daimler AG, 70327 Stuttgart (DE)
(72) Erfinder: Dobrinski, Alexander, Dr., 70190 Stuttgart (DE); Messerschmidt, Dieter, Dr., 71263 Weil der Stadt (DE); Mühleck, Klaus Friedrich, 73230 Kirchheim (DE); Nikic, Iljo, 72070 Tübingen (DE); Rahn, Klaus-Peter, Dr., 71735 Eberdingen-Nussdorf (DE); Vorwerk, Christian, 29227 Celle (DE)
(74) Vertreter: JENSEN & SON

(56) Entgegenhaltungen:
- EP-A- 1 201 495
- FR-A- 2 770 813
- FR-A- 2 799 166

## Beschreibung

Die Erfindung betrifft eine Ladevorrichtung für ein Transportfahrzeug, wobei die Ladevorrichtung eine mit dem Transportfahrzeug verbindbare Verstelleinrichtung aufweist, mittels welcher eine Ladeplattform der betriebsbereiten Ladevorrichtung aus einer im Wesentlichen vertikalen Ruhestellung in eine geeignete, höhenverstellbare Ladestellung außerhalb des Transportfahrzeugs und wieder zurück in die Ruhestellung bewegbar ist, gemäß dem Oberbegriff des Anspruchs 1. Eine solche Vorrichtung ist aus der FR 2 770 813 A bekannt. Ferner bezieht sich die Erfindung auf ein Transportfahrzeug mit einer Ladevorrichtung, gemäß dem Oberbegriff des Anspruchs 23.

Ladevorrichtungen und entsprechend ausgerüstete Transportfahrzeuge der eingangs genannten Art sind bekannt. Beispielsweise offenbart die DE 101 43 591 A1 eine Hubladebühnenvorrichtung zum Anschluss an eine Tragkonstruktion, insbesondere eines Fahrzeugs. Die Hubladebühnenvorrichtung enthält eine Ladeplattform, eine Anschlusseinrichtung und zwei zwischen der Ladeplattform und der Anschlusseinrichtung angelenkte, untereinander parallel beabstandete Gelenkmechanismen, auf die Hubzylinder und Neigezylinder zum Heben und Senken der Ladeplattform und/oder Neigen der Ladeplattform gegenüber der Horizontalen einwirken.

Es ist Aufgabe der Erfindung, eine alternative Ladevorrichtung vorzuschlagen, welche zum Einsatz in einem Transportfahrzeug geeignet ist. Ferner ist es Aufgabe der Erfindung, ein Transportfahrzeug mit einer entsprechenden Ladevorrichtung vorzuschlagen.

Zur Lösung der Aufgabe wird eine Ladevorrichtung mit den Merkmalen des Anspruchs 1 vorgeschlagen. Die erfindungsgemäße Ladevorrichtung zeichnet sich dadurch aus, dass die Ladeplattform zwei Plattformelemente aufweist, die in Ruhestellung voneinander getrennt angeordnet und in Ladestellung miteinander zerstörungsfrei trennbar verbunden sind. Eine Ladeplattform mit zwei in Ruhestellung voneinander getrennten Plattformelementen kann einen verbesserten Zugang zum Laderaum des Transportfahrzeugs gewährleisten aufgrund der Möglichkeit einer im Wesentlichen vertikalen und kompakten Anordnung der Plattformelemente in einem oder in mehreren Laderaumbereichen im Inneren des Transportfahrzeugs, welche hinsichtlich der Laderaumzugänglichkeit unkritisch sind. Gleichzeitig wird nach Herstellung einer zerstörungsfrei trennbaren Verbindung zwischen den Plattformelementen außerhalb des Transportfahrzeugs eine schnelle und betriebssichere Be- bzw. Entladung des Transportfahrzeugs mittels der hub- bzw. höhenverstellbaren Ladeplattform der Ladevorrichtung ermöglicht. Dabei ist die Hubbewegung der Ladeplattform auch zur Einnahme geeigneter Ladestellungen (untere und obere Ladestellung) vorgesehen.

Mit Vorteil sind die Plattformelemente in Ruhestellung voneinander beabstandet angeordnet. Hierdurch wird eine hinsichtlich der Zugänglichkeit des Laderaums besonders günstige, kompakte Anordnung der Plattformelemente in ihrer vertikalen Ruhestellung im Inneren des Laderaums des Transportfahrzeugs ermöglicht. Eine diesbezügliche Anordnung in Ruhestellung kann beispielsweise derart erfolgen, dass jeweils ein Plattformelement in einem seitlichen Heckbereich innerhalb eines Laderaums in im Wesentlichen vertikaler Ruhestellung positioniert ist, sodass weiterhin eine ungestörte Zugänglichkeit des Laderaums durch einen mittleren Korridor gewährleistet ist. Da die Plattformelemente Teilelemente einer Ladeplattform sind, können sie derartig gestaltet sein, dass sie eine möglichst geringe Breite und/oder Tiefe des Laderaums belegen, sodass der nutzbare Laderaumkorridor möglichst breit ist und ein insbesondere großer Laderaum zur Verfügung steht nach Positionierung der Ladevorrichtung in ihrer vertikalen Ruhestellung innerhalb des Transportfahrzeugs.

Die Verstelleinrichtung ist vorzugsweise als eine Schwenk-Hub-Verstelleinrichtung ausgebildet. Hierbei dient die Schwenkfunktion der Verstelleinrichtung insbesondere zur Positionierung der Plattformelemente aus einer jeweiligen vertikalen Ruhestellung im Inneren des Transportfahrzeugs in eine geeignete Ladestellung außerhalb des Transportfahrzeugs, während die Hubfunktion der Verstelleinrichtung insbesondere zur Höhenverstellung der Ladeplattform in verschiedene Betriebsstellungen während einer Be- bzw. Entladung des Transportfahrzeugs dient.

Gemäß einer vorteilhaften Ausführungsform enthält die Verstelleinrichtung für jedes Plattformelement einen zugehörigen, sich im Wesentlichen in vertikaler Richtung erstreckenden Hubmast, an welchem ein in Längsrichtung des Hubmastes hubbewegbarer und von diesem abstehender Querträgerarm befestigt ist, der eine Plattformelement-Trägereinheit aufweist, wobei die Plattformelemente jeweils an einer zugehörigen Plattformelement-Trägereinheit um eine im Wesentlichen horizontale Achse schwenkbewegbar gelagert sind. Somit ist für jedes Plattformelement ein spezifisches Verstellsystem vorgesehen, welches auf Grund seiner besonderen Schwenk- und Hubbewegbarkeit eine betriebsgünstige Positionierung der Plattformelemente in eine geeignete Ladestellung sowie eine im Bezug auf die Zugänglichkeit des Laderaums günstige Positionierung derselben Plattformelemente in ihre vertikale Ruhestellung ermöglicht. Eine derart konzipierte Verstelleinrichtung ist verhältnismäßig einfach und betriebssicher handhabbar.

Die Plattformelement-Trägereinheiten enthalten vorzugsweise jeweils einen sich im Wesentlichen in vertikaler Richtung erstreckenden und um eine im Wesentlichen vertikale Achse schwenkbewegbaren Trägermast, der an dem zugehörigen Querträgerarm angelenkt ist. Aufgrund der Anlenkung des Querträgerarms mit dem zugehörigen Trägermast ist es möglich, die Ladevorrichtung in Ruhestellung als besonders kompakte Funktionseinrichtung innerhalb des Laderaums des Transportfahrzeugs anzuordnen.

Die Plattformelement-Trägereinheiten weisen mit Vorteil jeweils einen sich im Wesentlichen in horizontaler Richtung erstreckenden, vom zugehörigen Trägermast abstehenden Zapfen auf, an welchem das zugehörige Plattformelement um die Zapfenlängsachse zwischen einer Vertikalstellung und einer Horizontalstellung schwenkbewegbar befestigt ist. Hierdurch wird eine handhabungsfreundliche Verstellmöglichkeit der Plattformelemente aus einer raumsparenden Vertikalstellung in eine in Bezug auf den Beladevorgang stabile Horizontalstellung gewährleistet, wobei die Ladeplattform in der Horizontalstellung hubbewegbar ist zur Positionierung derselben in eine geeignete Ladestellung.

Entsprechend einer bevorzugten Ausführungsvariante sind die Plattformelemente relativ zu den zugehörigen Zapfen lagebewegbar zur variablen Einstellung der Breite der Ladeplattform in der Ladestellung. Hierdurch wird eine Anpassung der Ladeplattformbreite an die Größe der Ladegüter und/oder an die Breite des Laderaums bzw. des nutzbaren Zugangsbereichs desselben ermöglicht.

Die Plattformelemente sind in der Ladestellung vorzugsweise mittels einer Kupplungseinrichtung miteinander zerstörungsfrei trennbar verbunden. Dabei kann die Kupplungseinrichtung derart ausgebildet sein, dass eine nicht veränderbare Breite der Ladeplattform in der Ladestellung eingestellt werden kann oder alternativ eine variable Einstellung derselben Breite in Abhängigkeit der jeweiligen Ladeanforderungen möglich ist.

Entsprechend einer bevorzugten Ausführungsform weist die Kupplungseinrichtung ein die zwei Zapfen miteinander verbindendes Kupplungselement und/oder mindestens ein die Plattformelemente direkt miteinander verbindendes Kupplungselement auf. Die Kupplungseinrichtung gewährleistet eine hinreichende Eigensteifigkeit der miteinander zerstörungsfrei trennbar verbundenen Plattformelemente zur Ausbildung einer ladestabilen Ladeplattform. Die Kupplungselemente können bevorzugt manuell mit den Plattformelementen in einer im Wesentlichen vertikalen oder horizontalen Stellung verbunden werden.

Die Plattformelemente sind an ihren Enden vorzugsweise jeweils mit schwenkbewegbaren Brückenelementen versehen. Die Brückenelemente dienen zur Überbrückung der Ladeplattformebene mit der Laderaumebene des Transportfahrzeugs in einer oberen Ladestellung bzw. der Ladeplattformebene in einer unteren Ladestellung mit einer externen Ebene (z.B. dem Fußboden). Mittels der schwenkbewegbaren Brückenelemente können somit verhältnismäßig einfach und sicher Höhenunterschiede der Ladeplattformebene in den verschiedenen Ladestellungen relativ zu angrenzenden Ladeebenen besonders schnell und betriebssicher überbrückt werden. Ferner begünstigen die schwenkbaren Brückenelemente eine besonders kompakte Positionierung der Ladervorrichtung in der Ruhestellung innerhalb des Laderaums des Transportfahrzeugs.

Die Verstelleinrichtung kann ein vollautomatisiertes oder ein teilautomatisiertes oder ein manuell betätigbares Antriebssystem zur Durchführung einer Schwenk- und/oder einer Hubbewegung aufweisen. Auf Grund der Teilung der Ladeplattform in mindestens zwei Plattformelemente ist im Rahmen eines Leichtbaukonzepts eine in Bezug auf das Gewicht besonders günstige Ausgestaltung der Ladevorrichtungen möglich. Dabei ist zur Durchführung einer Schwenk- und/oder einer Hubbewegung unterschiedlicher Funktionseinheiten der Ladevorrichtung ein manuell betätigbares Antriebsystems bis hin zu einem vollautomatisierten Antriebssystem vorteilhaft in der Ladevorrichtung einsetzbar. Eine derartige Entscheidung hinsichtlich des Automatisierungsgrads der Ladevorrichtung kann unabhängig von der Größe des Transportfahrzeugs getroffen werden.

Gemäß einer vorteilhaften Ausführungsform weist das Antriebssystem mindestens ein Antriebsaggregat in Form eines Hydraulikaggregats und/oder in Form eines Kugelgewindetriebs und/oder in Form eines Zahnriementriebs und/oder in Form eines Rollenkettentriebs und/oder in Form einer Seilwinde, jeweils für eine Hubeinrichtung, auf. Somit können unterschiedliche Antriebskonzepte für die Verstellung der Plattformelemente vorsehen werden, wobei diesbezüglich auch konstruktive Anforderungen an die Ladevorrichtung, wie zum Beispiel im Rahmen von Leichtbaukonzepten und/oder von Bestrebungen zur Erzielung einer optimierten Laderaumausnutzung bzw. Laderaumzugänglichkeit, flexibel und an das jeweilige Transportfahrzeug optimiert angepasst erfüllt werden können.

Mit Vorteil weist die Hubeinrichtung für jedes Plattformelement einen zugehörigen Laufwagen auf, der mit einem Hubmast verschiebebeweglich und mit dem Querträgerarm gelenkbeweglich verbunden ist. Die Verschiebebewegung des Laufwagens dient dabei zur Durchführung einer Hubbewegung der Ladeplattform in eine geeignete obere bzw. untere Ladestellung, während die Gelenkbewegung des Querträgerarms relativ zum Laufwagen zur Verstellung der Ladevorrichtung in die Ruhestellung oder in eine geeignete Ladestellung dient. Eine derartige Hubeinrichtung ist verhältnismäßig einfach realisier- und handhabbar.

Entsprechend einer möglichen Ausführungsform sind die Laufwagen jeweils mit einem zugehörigen Seilstrang verbunden, wobei die Seilstränge jeweils an ihrem anderen Ende mit dem mindestens einen Antriebsaggregat verbunden sind. Ein derartiges Antriebskonzept zeichnet sich durch ein vergleichsweise geringes Gewicht und einen relativ kleinen Raumbedarf aus.

Die Seilstränge können mit einem einzigen, gemeinsamen Antriebsaggregat verbunden sein. Somit ist für beide Laufwagen der Hubeinrichtung ein einziges, gemeinsames Antriebsaggregat vorgesehen, welches mit einem jeweiligen Seilstrang mit dem entsprechenden Laufwagen verbunden ist. Das Antriebsaggregat kann insbesondere als zweifachwirkende Seilwinde, d.h. zwei miteinander gekoppelte Seilwinden in Form eines einzigen Antriebsaggregats, ausgebildet sein. Bei diesem Antriebskonzept ist das Antriebsaggregat besonders raumsparend in das Transportfahrzeug integrierbar.

Gemäß einer weiteren, möglichen Ausführungsform weist die Verstelleinrichtung ein Trägerportal auf, das die zwei vertikalen Hubmaste und einen zwischenangeordneten horizontalen Querträger enthält, wobei mindestens ein Antriebsaggregat im Bereich des Querträgers angeordnet ist. Ein Trägerportal zeichnet sich durch eine besonders hohe Verformungsstabilität aus und begünstigt gleichzeitig einen hinreichend freien Zugang zum Laderaum. Hierbei kann der vollständige Portalumfang als Verbindungsbereich für eine oder mehrere Funktionseinheiten der Ladevorrichtung genutzt werden. Der zwischenangeordnete horizontale Querträger kann insbesondere dazu genutzt werden, ein für beide Plattformelement bzw. für beide Laufwagen vorgesehenes gemeinsames Antriebsaggregat zu tragen bei verhältnismäßig günstiger Betriebskraftübertragung auf das Trägerportal.

Mit Vorteil sind die Plattformelemente mittels einer Halteeinrichtung wenigstens in Schwenkrichtung von der Ruhestellung in die Ladestellung ladestabil fixierbar. Hierzu kann die Halteeinrichtung jeweils für ein Plattformelement ein zugehöriges Halteseil oder Haltekette aufweisen, die endseitig an dem entsprechenden Trägermast und dem zugehörigen Plattformelement befestigt ist. Eine derartige Halteeinrichtung ermöglicht die zuverlässige Beibehaltung einer erwünschten Horizontalstellung der Ladeplattform in einer jeweiligen Ladestellung. Darüber hinaus erlaubt sie eine handhabungsfreundliche Verstellung der Plattformelemente zur Einnahme der Ruhestellung oder einer Ladestellung.

Ferner wird zur Lösung der Aufgabe ein Transportfahrzeug mit den Merkmalen des Anspruchs 23 vorgeschlagen. Das Transportfahrzeug zeichnet sich dadurch aus, dass die Ladeplattform mindestens zwei Plattformelemente aufweist, die in Ruhestellung innerhalb des Transportfahrzeugs voneinander getrennt angeordnet und in Ladestellung miteinander zerstörungsfrei trennbar verbunden sind. Die Plattformelemente sind somit in Ruhrstellung jeweils innerhalb des Laderaums angeordnet. Mittels eines derartigen, mit einer erfindungsgemäßen Ladevorrichtung ausgestatteten Transportfahrzeugs lassen sich die in Bezug auf die Ladevorrichtung oben erwähnten Vorteile erzielen.

Entsprechend einer bevorzugten Ausführungsform sind die Plattformelemente in der Ruhestellung voneinander beabstandet und im Wesentlichen senkrecht zu einer jeweils zugehörigen Innenseite einer Seitenwand außerhalb eines Zugangsbereichs des Laderaums des Transportfahrzeugs angeordnet. Dies ermöglicht eine transportgünstige Anordnung der Ladevorrichtung in Ruhestellung und eine handhabungsfreundliche Verstellmöglichkeit der Ladevorrichtung zur Einnahme einer Ladestellung.

Die Ladevorrichtung weist vorzugsweise mindestens ein Antriebsaggregat auf, das in einem unteren Bereich des Transportfahrzeugs außerhalb des Laderaums angeordnet ist. Hierdurch wird weder die Zugänglichkeit des Laderaums noch dessen Nutzbarkeit negativ durch die Anordnung des Antriebsaggregats beeinflusst.

Bei der Ladevorrichtung kann es sich um eine Heckladevorrichtung handeln, während das Transportfahrzeug ein Kleintransportfahrzeug sein kann. Die Ladevorrichtung kann somit nicht nur in größeren Transportfahrzeugen, sondern auch aufgrund seiner kompakten Ausgestaltung und der möglichen Gewichtsreduzierung vorteilhaft auch in Kleintransportfahrzeugen eingesetzt werden. Die Ladevorrichtung ist allerdings nicht auf den Einsatz als Heckladevorrichtung in einem Transportfahrzeug beschränkt, sondern kann auch als seitliche Ladevorrichtung in einem Transportfahrzeug genutzt werden, ohne das konstruktiv grundlegende Veränderungen hierzu an der Ladevorrichtung vorgenommen werden müssen. Somit ist die Ladevorrichtung vorteilhaft in unterschiedlichen Transportfahrzeugen und insbesondere in Lastkraftwagen mit jeweils geschlossenem Laderaum einsetzbar.

Weitere Vorteile der Erfindung ergeben sich aus der Beschreibung.

Die Erfindung wird anhand mehrerer bevorzugter Ausführungsbeispiele unter Bezugnahme auf eine schematische Zeichnung näher erläutert.

Dabei zeigen:
- Fig. 1: eine schematische Perspektivdarstellung eines Transportfahrzeugs mit einer erfindungsgemäßen Ladevorrichtung in Ruhestellung;
- Fig. 2 - 6: eine jeweils schematische Perspektivdarstellung der Ladevorrichtung der Fig. 1 in unterschiedlichen, aufeinander abfolgenden Montagefasen zur Positionierung der Ladevorrichtung in eine geeignete Ladestellung;
- Fig. 7: eine schematische Perspektivdarstellung der Ladevorrichtung der Fig. 1 in einer unteren Ladestellung;
- Fig. 8: eine schematische Perspektivdarstellung der Ladevorrichtung der Fig. 1 in einer oberen Ladestellung;
- Fig. 9: eine schematische Perspektivdarstellung des Transportfahrzeugs der Fig. 1 mit Laderaummodulen;
- Fig. 10 - 15: schematische Perspektivdarstellungen von Teilen erfindungsgemäßer Ladevorrichtungen mit Antriebssystemen unterschiedlicher Ausführungsformen;
- Fig. 16: eine schematische Vorderansicht auf ein Trägerportal für eine erfindungsgemäße Ladevorrichtung;
- Fig. 17 - 18: jeweils eine schematische Seitenansicht von Antriebssystemen unterschiedlicher Ausführungsformen für eine erfindungsgemäße Ladevorrichtung;
- Fig. 19: eine schematische Perspektivdarstellung von Teilen einer erfindungsgemäßen Ladevorrichtung entsprechend einer weiteren, alternativen Ausführungsform;
- Fig. 20: ein schematische Detaildarstellung des Antriebssystems der Ladevorrichtung der Fig. 19;
- Fig. 21: eine schematische Perspektivdarstellung von Teilen einer erfindungsgemäßen Ladevorrichtung gemäß einer weiteren, alternativen Ausführungsform;
- Fig. 22: eine schematische Detaildarstellung des Antriebssystems der Ladevorrichtung der Fig. 21;
- Fig. 23: eine schematische Perspektivdarstellung einer teilweise gezeigten, erfindungsgemäßen Ladevorrichtung mit einer Ladeplattform gemäß einer möglichen Ausführungsform und
- Fig. 24: eine schematische Perspektivdarstellung eines Laufwagenbereichs einer erfindungsgemäßen Ladevorrichtung.

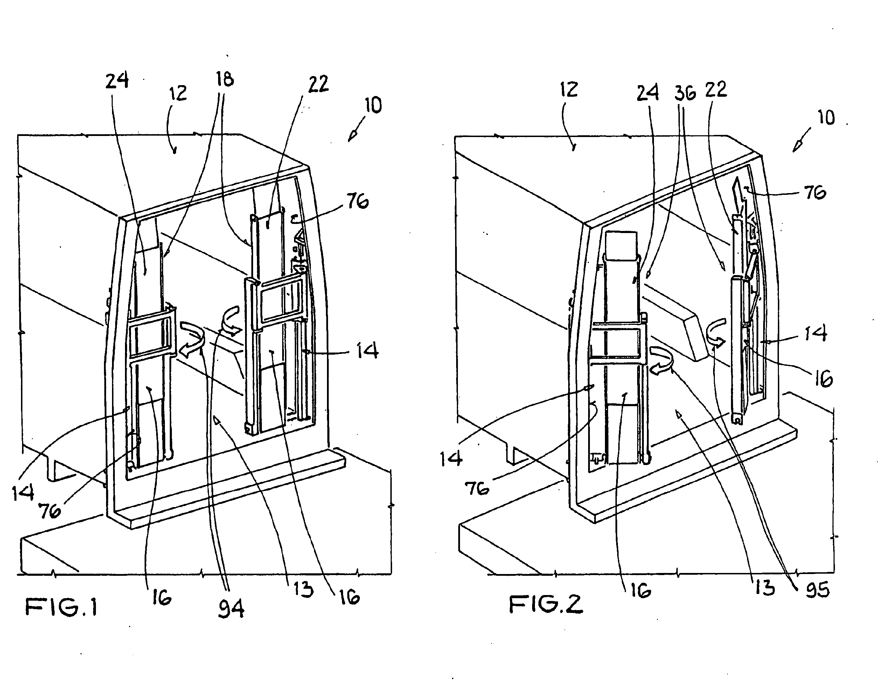

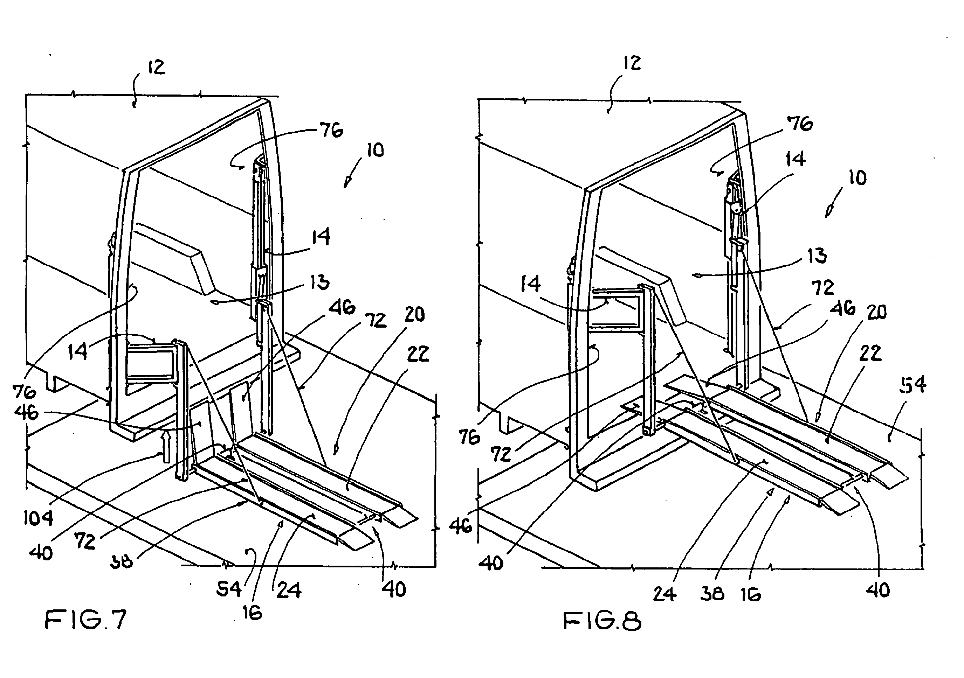

Die Figuren 1 bis 8 zeigen jeweils eine schematische Perspektivdarstellung einer erfindungsgemäßen Ladevorrichtung 10, welche in unterschiedlichen Betriebs- bzw. Montagesituationen in einem Transportfahrzeug 12 im Heckbereich eines Laderaums 13 integriert angeordnet ist. Die Ladevorrichtung 10 weist eine Ladeplattform 16 auf, welche zwei Plattformelemente 22, 24 enthält. Die Plattformelemente 22, 24 sind jeweils mittels einer zugehörigen Verstelleinrichtung 14 mit dem Transportfahrzeug 12 verbunden. Die Verstelleinrichtung 14 dient dazu, die Ladevorrichtung 10 aus einer im Wesentlichen vertikalen Ruhestellung 18 -gemäß Figur 1- in eine geeignete, höhenverstellbare Ladestellung 20 außerhalb des Transportfahrzeugs 12 -gemäß den Figuren 7,8 - und wieder zurück in die Ruhestellung 18 zu bewegen.

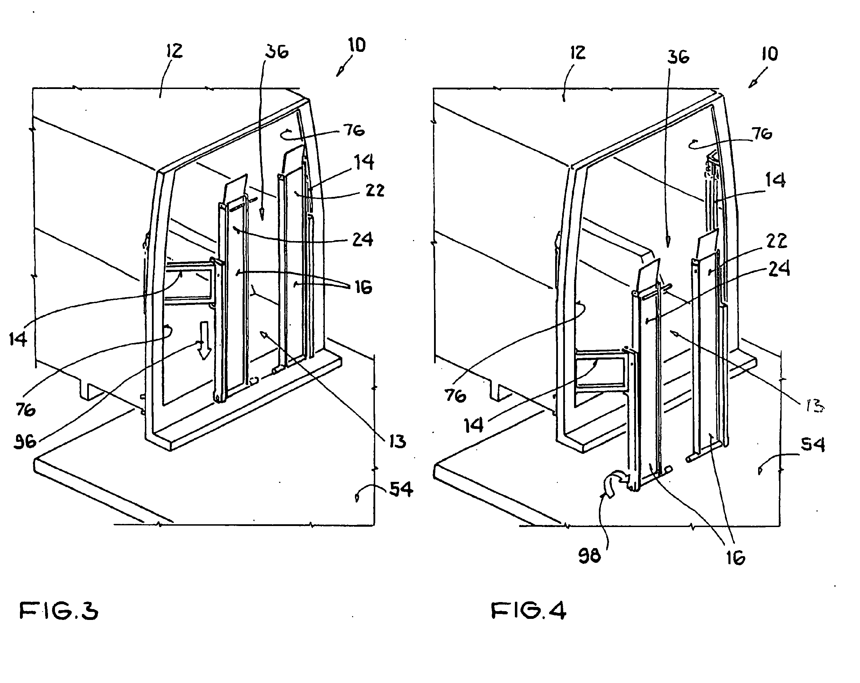

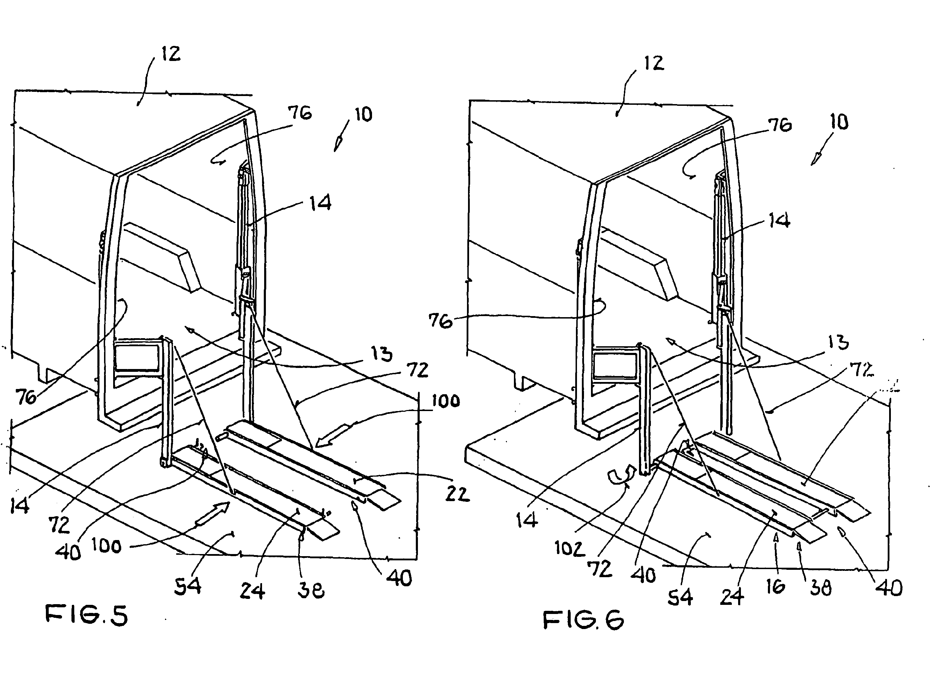

Wie in Figur 1 dargestellt ist, sind die Plattformelemente 22, 24 in der Ruhestellung 18 voneinander beabstandet und im Wesentlichen senkrecht von einer jeweils zugehörigen Innenseite einer Seitenwand 76 des Transportfahrzeugs 12 abstehend angeordnet, außerhalb eines Zugangsbereichs des Laderaums 13 desselben Transportfahrzeugs 12. Zur Verstellung der Ladevorrichtung 10 in eine geeignete Ladestellung 20 (gemäß der Figur 7 oder 8) werden die Plattformelemente 22, 24 aus ihrer Ruhestellung 18 mittels einer Schwenkbewegung der zugehörigen Verstelleinrichtung 14 entsprechend Pfeil 94 von innen aus dem Laderaum 13 des Transportfahrzeugs 12 nach außen herausgeschwenkt (siehe auch Figur 2), wobei die Plattformelemente 22, 24 während dieser Schwenkbewegung der Verstelleinrichtung 14 gemäß Figur 2 weiterhin jeweils eine Vertikalstellung 36 beibehalten. Gleichzeitig oder anschließend werden die Plattformelemente 22, 24 gemäß Pfeil 95 jeweils von der Verstelleinrichtung 14 weggeschwenkt (siehe auch Figur 3). Wenn die Plattformelemente 22, 24 eine vorgegebene Schwenkposition außerhalb des Laderaums 13 gemäß Figur 3 eingenommen haben, werden sie entsprechend Pfeil 96 im Wesentlichen vertikal nach unten bewegt, bis sie mit ihren jeweils unteren Ende mit dem Fußboden 54 außerhalb des Transportfahrzeugs 12 in Anlagekontakt kommen (siehe Figuren 3 und 4). Anschließend werden die Plattformelemente 22, 24 gemäß Pfeil 98 der Figur 4 aus ihrer aktuellen Vertikalstellung 36 in eine Horizontalstellung 38 entsprechend Figur 5 geschwenkt. In dieser Horizontalstellung befinden sich die Plattformelemente 22, 24 vollständig oder wenigstens teilweise in Anlagekontakt mit dem Fußboden 54. Die Plattformelemente 22, 24 werden entsprechend den zwei Pfeilen 100 der Figur 5 aufeinander zubewegt, sodass sie mittels einer Kupplungseinrichtung 40 miteinander zerstörungsfrei trennbar verbunden werden können (siehe Figur 6). Nun werden zwei auf den Plattformelementen 22, 24 liegende und mit selbigen endseitig schwenkbewegbar verbundene Brückenelemente 46 entsprechend Pfeil 102 jeweils aus einer horizontalen Passivstellung (siehe Figur 6) in eine im Wesentlichen vertikale Anlagestellung mit dem Transportfahrzeug 12 schwenkbewegt (siehe Figur 7). Die Verstelleinrichtung 14 ist mit einer Halteeinrichtung 72 für die Plattformelemente 22, 24 versehen, mittels welcher selbige in der horizontalen Ladestellung ladestabil an der Verstelleinrichtung 14 fixiert sind. Die Halteeinrichtung 72 weist gemäß dem dargestellten Ausführungsbeispiel jeweils für ein Plattformelement 22, 24 ein zugehöriges Halteseil oder Haltekette auf, welche endseitig mit dem zugehörigen Plattformelement 22, 24 verbunden ist. Die sich nun in einer stabilen Ladestellung 20 befindende Ladeplattform 16 entsprechend Figur 7 kann gemäß Pfeil 104 zum Beladen des Transportfahrzeugs 12 bzw. zum Entladen desselben aus einer horizontalen, unteren Ladestellung 20 (siehe Figur 7) in eine horizontal obere Ladestellung 20 (siehe Figur 8) und wieder zurück in die untere Ladestellung bewegt werden. Diese Bewegung wird mittels einer Hubbewegung eines Teils der Verstelleinrichtung 14 realisiert, wobei der konstruktive Aufbau und die Funktionsweise der Verstelleinrichtung 14 weiter unten detailliert beschrieben wird.

Entsprechend einer nicht in den Figuren dargestellten Ausführungsform kann das Verbinden der Plattformelemente 22, 24 mittels der Kupplungseinrichtung 40 in der Vertikalstellung gemäß Figur 3 oder gemäß Figur 4 erfolgen, da die Plattformelemente 22, 24 auch in der Vertikalstellung aufeinander zubewegt werden können.

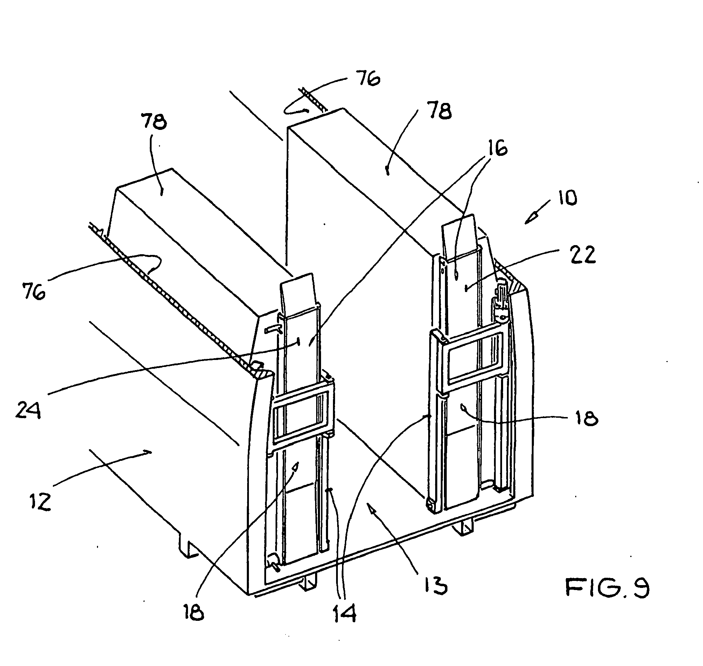

Figur 9 zeigt eine schematische Perspektivdarstellung der in einem Transportfahrzeug 12 eingebauten und sich in der Ruhestellung 18 befindenden Ladevorrichtung 10 der Figuren 1 bis 8. Das Transportfahrzeug 12 ist im Inneren seines Laderaums 13 im Bereich der Seitenwände 76 mit jeweils einem Laderaummodul 78 versehen, wobei die Laderaummodule 78 beispielsweise als in einem Transportfahrzeug übliche Aufbewahrungseinrichtungen ausgebildet sein können. Die Plattformelemente 22, 24 mit den entsprechenden Verstelleinrichtungen 14 sind im Heckbereich des Laderaums 13 derart angeordnet, dass der Zugangsbereich (mittlerer Korridor) in den noch freien Laderaum 13 des Transportfahrzeugs 12 von der Ladevorrichtung 10 in Ruhestellung 18 unbeeinflusst bleibt. Dieser vorteilhafte Effekt ist insbesondere für Kleintransportfahrzeuge von großer Bedeutung.

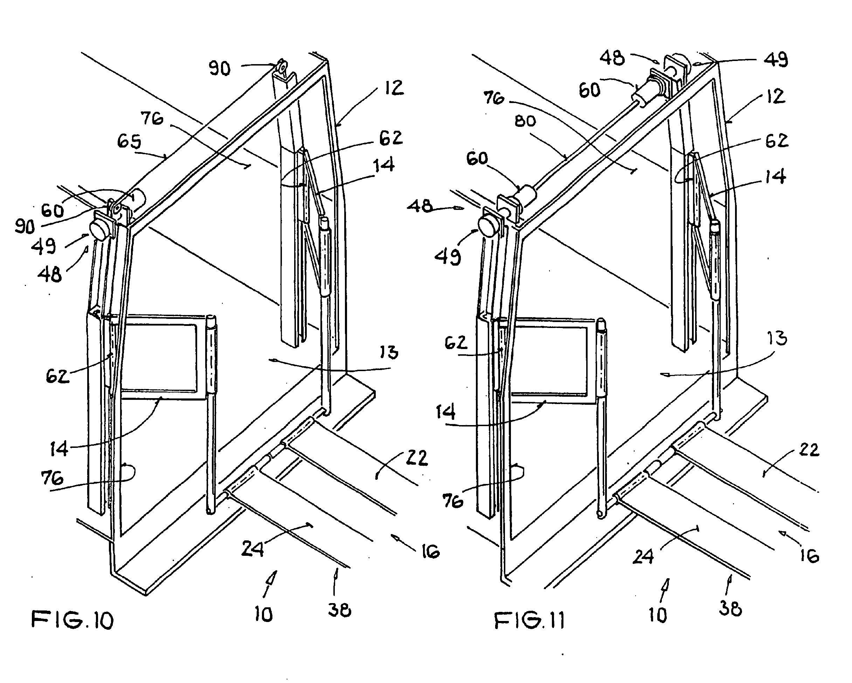

Die Figuren 10 bis 13 zeigen jeweils schematische Perspektivdarstellungen von möglichen Ladevorrichtungen 10 gemäß unterschiedlichen Ausführungsformen. Dabei ist diesen Ausführungsformen gemeinsam, dass die Ladevorrichtung 10 mit einem Antriebssystem 48 ausgestattet ist, welches mindestens ein Antriebsaggregat 49 in Form einer Seilwinde 60 zur Realisierung einer Hubladebewegung an der Verstelleinrichtung 14 aufweist. Insbesondere zeigen die Figuren 10, 12, 13 ein Antriebssystem 48 mit einem einzigen Antriebsaggregat 49 in Form einer Seilwinde 60 und die Figur 11 ein Antriebssystem 48 mit einem für jedes Plattformelement 22, 24 separaten Antriebsaggregat 49 in Form einer Seilwinde 60.

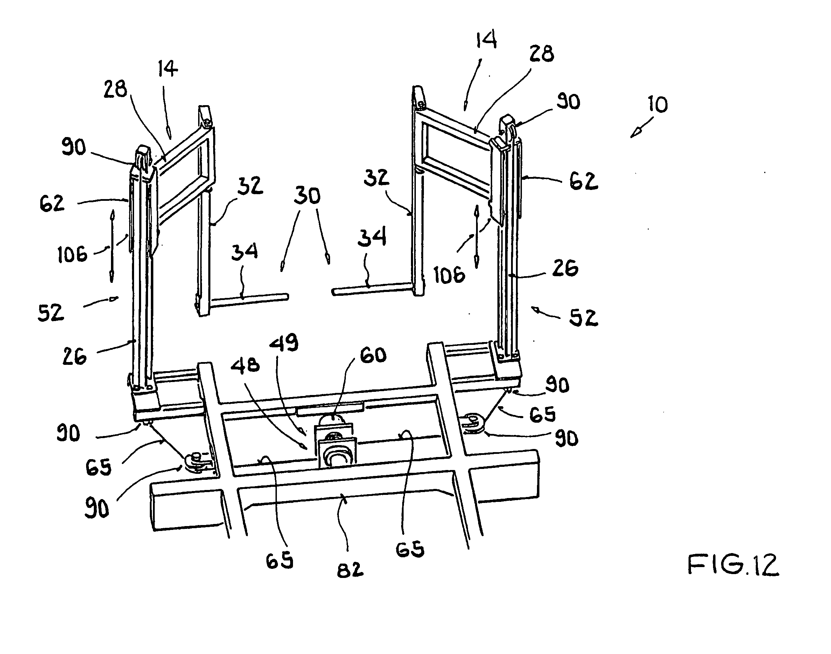

Die zur Durchführung des Be- bzw. Entladevorgangs mittels der Ladervorrichtung 10 erforderliche Ladehubbewegung wird anhand der Figur 12 im Folgenden eingehend beschrieben. Die Verstelleinrichtung 14 enthält für jedes Plattformelement 22, 24 einen zugehörigen, sich im Wesentlichen in vertikaler Richtung erstreckenden Hubmast 26, der lagefest an einem Fahrzeugrahmen 82 des Transportfahrzeugs 12 befestigt ist. Mit dem jeweiligen Hubmast 26 ist ein zugehöriger Laufwagen 62 derart verbunden, dass der Laufwagen 62 gemäß Doppelpfeil 106 entlang dem Hubmast 26 in im Wesentlichen vertikaler Richtung verschiebebewegt werden kann. Somit bildet ein jeweiliger Hubmast 26 mit einem zugehörigen Laufwagen 62 eine Hubeinrichtung 52. Dabei entspricht die Laufwagenbewegung gemäß Doppelpfeil 106 der Figur 12 prinzipiell der Hubbewegung der Ladeplattform 16 gemäß Pfeil 104 der Figur 7. Mit den Laufwagen 62 ist ein zugehöriger Querträgerarm 28 gelenkbeweglich verbunden zur Realisierung der Schwenkbewegung gemäß Pfeil 94 der Figuren 1 und 2. Der jeweilige Querträgerarm 28 steht von dem zugehörigen Laufwagen 62 und somit auch vom entsprechenden Hubmast 26 im Wesentlichen in horizontaler Richtung quer ab und ist an seinem anderen Ende mit einer zugehörigen Plattformelement-Trägereinheit 30 versehen. Die Plattformelement-Trägereinheiten 30 weisen jeweils einen sich im Wesentlichen in vertikale Richtung erstreckenden und um eine im Wesentlichen vertikale Achse schwenkbewegbaren Trägermast 32 auf, der mit dem zugehörigen Querträgerarm 28 gelenkverbunden ist, zur Realisierung der Schwenkbewegung eines zugehörigen Plattformelements 22, 24 gemäß Pfeil 95 der Figur 2. Ferner enthalten die Plattformelement-Trägereinheiten 30 jeweils einen sich im Wesentlichen in horizontaler Richtung erstreckenden, vom zugehörigen Trägermast 32 abstehenden Zapfen 34, an welchem das zugehörige Plattformelement 22, 24 um die Zapfenlängsachse zwischen einer Vertikalstellung 36 (siehe auch Figur 4) und einer Horizontalstellung 38 (siehe Figur 5) schwenkbewegbar befestigt ist. Somit entspricht diese Schwenkbewegung der Plattformelemente 22, 24 prinzipiell der Schwenkbewegung gemäß Pfeil 98 der Figur 4. Die Ladevorrichtung 10 der Figur 12 ist mit einem Antriebssystem 48 versehen, das ein einziges Antriebsaggregat 49 in Form einer Seilwinde 60 aufweist. An der Seilwinde 60, die als zweifachwirkende, d.h. zweifachaufwickelnde Seilwinde ausgebildet ist, sind zwei Seilstränge 65 befestigt, welche mittels Seilrollen 90 (Umlenkrollen) mit einem zugehörigen Laufwagen 62 derart verbunden sind, dass bei entsprechender Betätigung der Seilwinde 60 der zugehörige Laufwagen 62 aufgrund der Relativbewegung des entsprechenden Seilstrangs 65 gemäß Doppelpfeil 106 entlang dem betreffenden Hubmast 26 bewegbar ist. Es handelt sich somit bei der Verstelleinrichtung 14 um eine Schwenk-Hub-Verstelleinrichtung, wobei die Hubbewegung zur Durchführung eines Be- bzw. Entladevorgangs durchgeführt wird, während die Schwenkbewegungen der jeweiligen Funktionselemente zur entsprechenden Positionierung der Ladevorrichtung in die Ruhestellung 18 (Figur 1) und in eine geeignete Ladestellung 20 (Figuren 7,8) dienen.

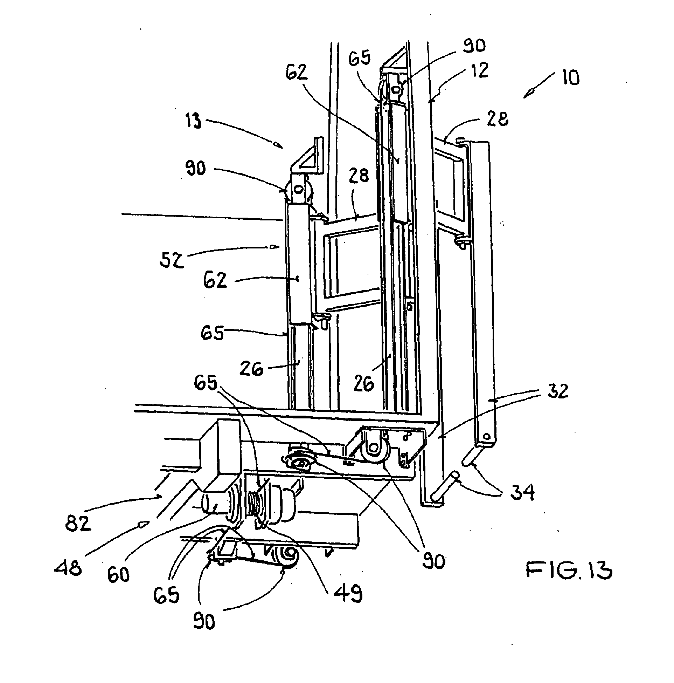

Fig. 13 zeigt die Ladevorrichtung 10 der Figur 12 aus einer anderen Perspektivdarstellung, wobei die Anordnung des Antriebsaggregats 49 in Form der zweifachwirkenden Seilwinde 60 in einem unteren Bereich des Transportfahrzeugs 12 außerhalb des Laderaums 13 vorgesehen ist. Somit wirkt sich das Antriebsaggregat 49 gemäß Figur 13 nicht einschränkend auf die Laderaumnutzung des Transportfahrzeugs 12 aus, da es außerhalb des Laderaums 13 am Fahrzeugrahmen 82 befestigt ist. Die Verbindung des Antriebsaggregats 49 mit den zwei Laufwagen 62 ist durch die zugehörigen Seilstränge 65 gewährleistet, welche mittels Seilrollen 90 entsprechend geführt sind.

Die Figuren 10 und 11 zeigen zwei alternative Ausführungsbeispiele einer erfindungsgemäßen Ladevorrichtung 10 mit einem jeweiligen Antriebssystem 48, wobei gemäß dieser beiden Ausführungsbeispiele die Antriebsaggregate 49 in Form von einer bzw. zwei Seilwinden 60 jeweils in einem oberen Bereich des Transportfahrzeugs 12 innerhalb oder ggf. auch außerhalb des Laderaums 13 angeordnet sind. Die Seilwinde 60 der Ladevorrichtung 10 gemäß Figur 10 ist als zweifachwirkende Seilwinde ausgebildet und mittels eines Seilstrangs 65 mit einem jeweiligen Laufwagen 62 der Verstelleinrichtung 14 verbunden. Die Ladevorrichtung 10 gemäß Figur 11 enthält zwei voneinander getrennte und beabstandet angeordnete Seilwinden 60, welche mittels einer Gleichlaufwelle 80 miteinander verbunden sind. Jede Seilwinde 60 steht darüber hinaus mittels eines separaten Seilstrangs mit einem zugehörigen Laufwagen 62 in Verbindung.

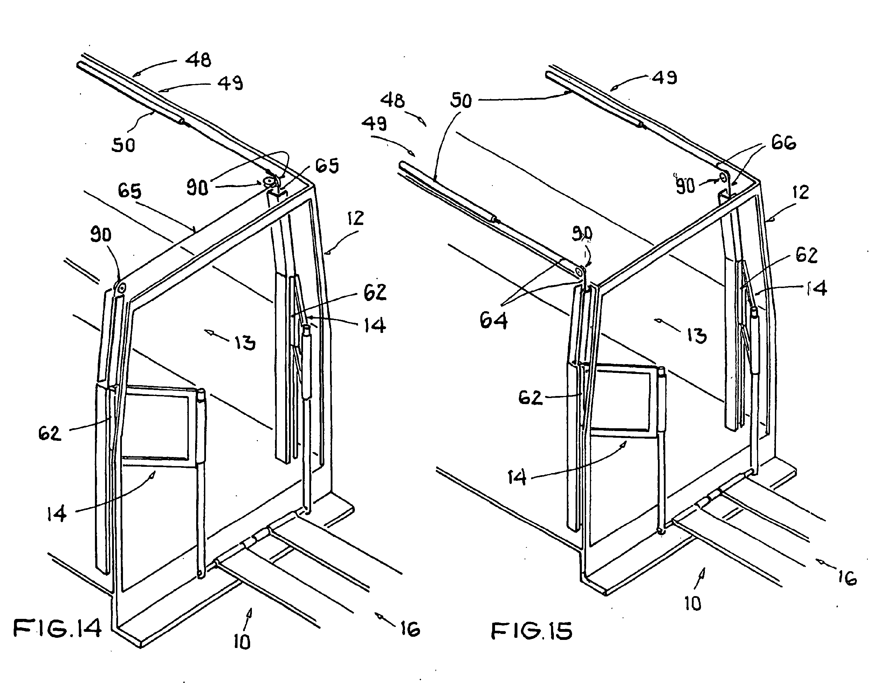

Die Figuren 14 und 15 zeigen weitere alternative Ausführungsbeispiele einer Ladevorrichtung 10 mit einem Antriebssystem 48, dass als Antriebsaggregat 49 mindestens ein Hydraulikaggregat 50 aufweist. Die Hydraulikaggregate 50 sind bei diesen Ausführungsbeispielen in einem oberen Bereich des Transportfahrzeugs 12 innerhalb oder auch außerhalb des Laderaums 13 angeordnet. Das Antriebsaggregat 49 gemäß dem Ausführungsbeispiel der Figur 14 enthält ein einziges Hydraulikaggregat 50, das mittels eines Seilstrang 65 mit den zwei Laufwagen 62 der Verstelleinrichtung 14 verbunden ist. Entsprechend dem Ausführungsbeispiel der Figur 15 weist das Antriebssystem 48 zwei voneinander getrennte und beabstandet angeordnete Hydraulikaggregate 50 auf, welche jeweils mittels eines Seilstrangs 64, 66 mit einem zugehörigen Laufwagen 62 der Verstelleinrichtung 14 verbunden sind. Die Hydraulikaggregate 50 beider Ausführungsformen der Figuren 14 und 15 sind jeweils in Längsrichtung des Laderraums 13 des Transportfahrzeugs 12 angeordnet.

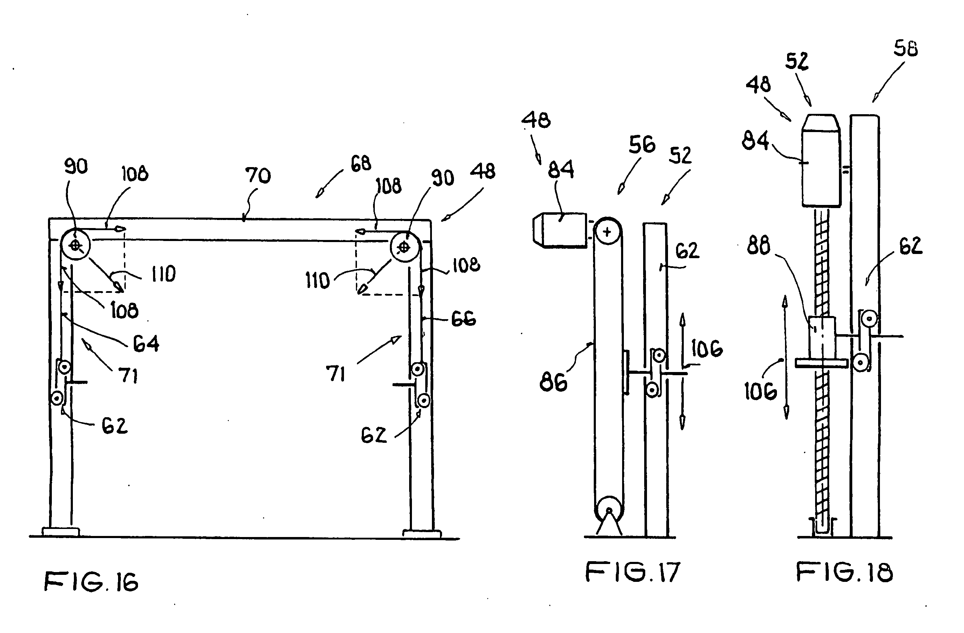

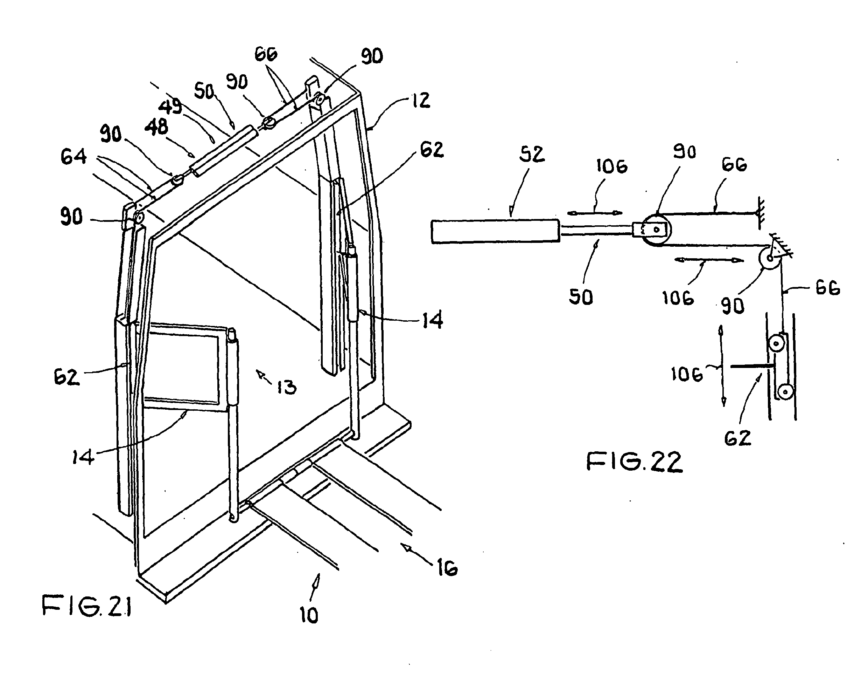

In Figur 16 ist schematisch ein Trägerportal 68 dargestellt, welches zur Aufnahme bzw. zur Stützung des Antriebssystems 48 einer erfindungsgemäßen Ladevorrichtung 10 dient. Eine derartige Ladevorrichtung 10 kann beispielsweise wie in Figur 21 dargestellt ausgebildet sein. Diese Ladevorrichtung 10 der Figur 21 enthält ein Antriebssystem 48 mit einem Antriebsaggregat 49 in Form eines Hydraulikaggregats 50, das in einem oberen Bereich des Transportfahrzeugs 12 innerhalb oder auch außerhalb des Laderaums 13 angeordnet ist. Dabei ist das Hydraulikaggregat 50 gemäß dieser Ausführungsform in Querrichtung des Transportfahrzeugs 12 angeordnet und mittels eines Seilstrangs 64 oder 66 mit einem zugehörigen Laufwagen 62 der Verstelleinrichtung 14 verbunden. Zur Aufnahme des Antriebsaggregats 49 einer Verstelleinrichtung 14, beispielsweise entsprechend Figur 21, ist das Trägerportal 68 mit einem Querträger 70 und zwei Vertikalträgern 71 versehen. Das am Querträger 70 befestigte Antriebsaggregat 49 (nicht in Figur 16 dargestellt) ist unter Zwischenschaltung der Seilrollen 90 mittels des Seilstrangs 64 bzw. 66 mit dem zugehörigen Laufwagen 62 verbunden. Die Portalbauweise der Aufnahmestruktur des Antriebssystems 48 erlaubt eine günstige Kompensation der wirkenden Kräfte des Seilstrangs 64 bzw. 66 (Pfeile 108) unter Ausbildung einer jeweiligen Kraftresultierenden gemäß Pfeil 110 im Bereich einer entsprechenden Seilrolle 90.

Die Figuren 17 und 18 zeigen alternative Ausführungsbeispiele eines Antriebssystems 48 für eine erfindungsgemäße Ladevorrichtung 10. Das Antriebssystem 48 gemäß der Figur 17 enthält einen Motor (insbesondere Elektromotor), der zum Betreiben eines Zahnriemens 86 bzw. einer Rollenkette 86 dient. Der Zahnriemen 86 bzw. die Rollenkette 86 ist mit einem Laufwagen 62 derart verbunden, dass bei einer entsprechenden Betätigung des Motors 84 der Laufwagen 62 gemäß Doppelpfeil 106 hubbewegbar ist. Es handelt sich somit bei dem Antriebssystem 48 der Figur 17 um einen Zahnriementrieb bzw. um einen Rollenkettentrieb zur Realisierung einer Hubeinrichtung 52 der Verstelleinrichtung 14. Das Antriebssystem 48 gemäß der Figur 18 enthält ebenfalls einen Motor 84 (beispielsweise in Form eines Elektromotors), der mit einem Kugelgewinde 88 in Verbindung steht. Das Kugelgewinde 88 ist derart mit einem zugehörigen Laufwagen 62 verbunden, dass bei Betätigung des Motors 84 der Laufwagen 62 gemäß Doppelpfeil 106 hubbewegbar ist. Das Antriebssystem 48 gemäß der Figur 18 enthält somit einen Kugelgewindetrieb 58 zur Ausbildung einer Hubeinrichtung 52 für eine Verstelleinrichtung 14 einer erfindungsgemäßen Ladevorrichtung 10.

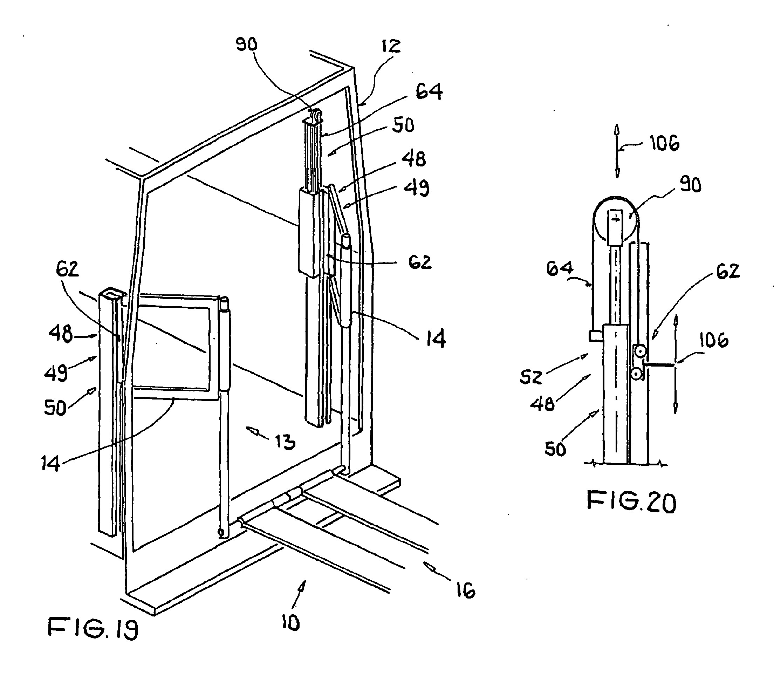

Die Figuren 19, 20 zeigen eine erfindungsgemäße Ladevorrichtung 10 entsprechend einer weiteren, alternativen Ausführungsform. Die Ladevorrichtung 10 enthält eine Verstelleinrichtung 14, die ein Antriebssystem 48 mit jeweils einem Antriebsaggregat 49 für jeden Laufwagen 62 aufweist. Die Antriebsaggregate 49 sind jeweils als ein vertikalstehender Hubzylinder nach dem Prinzip eines Gabelstaplers ausgebildet. Somit stellt das jeweilige Antriebsaggregat 49 auch hier ein Hydraulikaggregat 50 dar. Das Hydraulikaggregat 50 ist mittels eines Seilstrangs 64 bzw. 66 (siehe Figur 20) mit einem zugehörigen Laufwagen 62 unter Zwischenschaltung mindestens einer Seilrolle 90 derart verbunden, dass bei Betätigung des Hydraulikaggregats 50 gemäß Doppelpfeil 106 eine entsprechende Hubbewegung des zugehörigen Wagens 62 erhalten wird. Bei dem in Figur 20 dargestellten Ausführungsbeispiel ist die Seilrolle 90 (Umlenkrolle) mittig angeordnet, sodass auf eine spezielle Kolbenstangenführung verzichtet werden kann. Die Seilrolle 90 (Umlenkrolle) kann alternativ auch außermittig angeordnet sein bei entsprechender Kolbenstangenführung (siehe rechtes Hydraulikaggregat 50 in Figur 19).

Die Figuren 21 und 22 zeigen eine weitere, alternative Ausführungsform einer erfindungsgemäßen Ladevorrichtung 10, wobei hier als Antriebssystem 48 zwei oberhalb des Laderaums 13 in Querrichtung sich erstreckende Antriebsaggregate 49 in Form von Hydraulikaggregaten 50 vorgesehen sind. Bei den Hydraulikaggregaten 50 handelt es sich um zwei Zylinder, die jeweils mit einem zugehörigen Flaschenzugsystem verbunden sind. Das Flaschenzugsystem ist in Figur 22 dargestellt und enthält mindestens eine Seilrolle 90, welche als Umlenkrolle einen an einem Vertikalträger des Transportfahrzeugs 12 befestigten Seilstrang 66 zu einem Laufwagen 62 führt, mit welchem der Seilstrang 66 derart verbunden ist, dass bei einer Bewegung der Seilrollen 90 gemäß Doppelpfeil 106 eine entsprechende Hubbewegung des Laufwagens 62 erhalten wird.

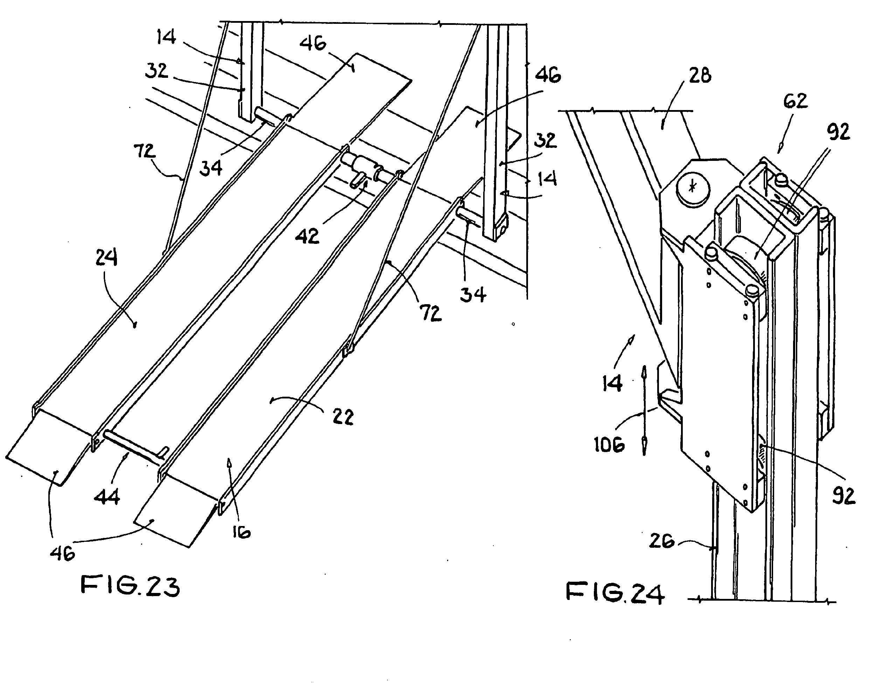

Figur 23 zeigt den Bereich der Ladeplattform 16 einer erfindungsgemäßen Ladevorrichtung 10. Die Ladeplattform 16 enthält zwei voneinander beabstandet angeordnete Plattformelemente 22, 24, welche mittels einer Kupplungseinrichtung 40 in Form von zwei Kupplungselementen 42, 44 miteinander formsteif verbunden sind. Das Kupplungselement 42 verbindet die zwei Zapfen 34 miteinander, an welchen die Plattformelemente 22, 24 schwenkbewegbar fixiert sind. Das zweite Kupplungselement 44 verbindet die Plattformelemente 22, 24 im Bereich ihrer freien Enden. Die Plattformelemente 22, 24 sind endseitig jeweils mit Brückenelemente 46 versehen, die ebenfalls schwenkbewegbar an den zugehörigen Plattformelementen 22, 24 befestigt sind. Ferner sind die Plattformelemente 22, 24 mittels einer Halteeinrichtung 72 beispielsweise in Form eines jeweiligen Seils oder Kette mit dem Trägermast 32 derart verbunden, dass die Plattformelemente 22, 24 in der in Figur 23 dargestellten Ladestellung 20 eine im Wesentlichen horizontale, ladestabile Position einnehmen, in welcher eine Be- bzw. Entladung des Transportfahrzeugs 12 möglich ist. Somit befinden sich die Plattformelemente 22, 24 sowohl in der unteren Ladestellung 20 als auch in der oberen Ladestellung 20 in einer stabilen Horizontalposition. Entsprechend einer möglichen Ausführungsform können die Plattformelemente 22, 24 ggf. mittels Verstellen der Halteeinrichtung 72 (manuell oder automatisiert) hinsichtlich ihrer Horizontalposition in der jeweiligen Ladestellung zusätzlich schwenkverstellbar sein. Hierdurch ist es möglich, an der Ladeplattform 16 eine Feinpositionierung in der jeweiligen Ladestellung 20 vorzunehmen. Eine derartige Feineinstellung kann sinnvoll sein zur Erzielung einer günstigen Positionierung der Ladeplattform 16 hinsichtlich der jeweils vorliegenden Ausgestaltung des Fußbodens 54 außerhalb des Fahrzeugs 12 (untere Ladestellung 20) sowie in Bezug auf den Hubprozess zwischen der unteren und oberen Ladestellung 20 beispielsweise in Abhängigkeit des jeweiligen Ladeguts. Die Kupplungselemente 42, 44 können sowohl in der Ladestellung 20 als auch in einer Vertikalstellung 36 zwischen den Plattformelementen 22, 24 bzw. zwischen den Zapfen 34 montiert werden.

Die Figur 24 zeigt eine Detaildarstellung einer Verstelleinrichtung 14 im Bereich eines Laufwagens 62. Der Laufwagen 62 enthält eine Mehrzahl an Laufrollen 92, welche eine Hubbewegung gemäß Doppelpfeil 106 des Laufwagens 62 relativ zum Hubmast 26 der Verstelleinrichtung 14 erlauben. Am Laufwagen 62 ist ein Querträgerarm 28 derart angelenkt, dass der Querträgerarm 28 um eine im Wesentlichen vertikale Achse schwenkbewegbar ist.

Die Ladevorrichtung 10 zeichnet sich insbesondere dadurch aus, dass sie in einem Transportfahrzeug einen verhältnismäßig geringen Nutzlastverlust verursacht, den Einsatz einer Anhängerkupplung nicht ausschließt und einen akzeptablen Zugang zum Laderaum des Transportfahrzeugs auch im eingeschwenkten Zustand (Ruhestellung) gewährleistet. Ferner ist die Ladevorrichtung 10 bedienungsfreundlich handhabbar, wobei die Ausfahrvorgänge der Plattformelemente 22, 24 mit Vorteil außerhalb des Laderaums stattfinden. Eine in Modulbauweise konzipierte Ladevorrichtung 10 kann relativ einfach auch im Rahmen einer Nachrüstung in einem Fahrzeug integriert bzw. an dessen Karosseriekontur angepasst werden. Schließlich ist eine hinsichtlich des Fahrverhaltens des Transportfahrzeugs günstige Lastenaufteilung in Bezug auf das aufzunehmende Gewicht der Ladevorrichtung 10 möglich, wenn die Ladevorrichtung im Heckbereich des Transportfahrzeugs angeordnet wird.

## Patentansprüche

1. Ladevorrichtung (10) für ein Transportfahrzeug (12), wobei die Ladevorrichtung (10) eine mit dem Transportfahrzeug (12) verbindbare Verstelleinrichtung (14) aufweist, mittels welcher eine Ladeplattform (16) der betriebsbereiten Ladevorrichtung (10) aus einer im Wesentlichen vertikalen Ruhestellung (18) in eine geeignete, höhenverstellbare Ladestellung (20) außerhalb des Transportfahrzeugs (12) und wieder zurück in die Ruhestellung (18) bewegbar ist,
**dadurch gekennzeichnet,**
**dass** die Ladeplattform (16) zwei Plattformelemente (22, 24) aufweist, die in Ruhestellung (18) voneinander getrennt angeordnet und in Ladestellung (20) miteinander zerstörungsfrei trennbar verbunden sind.

2. Ladevorrichtung nach Anspruch 1,
**dadurch gekennzeichnet,**
**dass** die Plattformelemente (22, 24) in Ruhestellung (18) voneinander beabstandet angeordnet sind.

3. Ladevorrichtung nach Anspruch 1 oder 2,
**dadurch gekennzeichnet,**
**dass** die Verstelleinrichtung (14) als eine Schwenk-Hub-Verstelleinrichtung ausgebildet ist.

4. Ladevorrichtung nach einem der vorhergehenden Ansprüche,
**dadurch gekennzeichnet,**
**dass** die Verstelleinrichtung (14) für jedes Plattformelement (22, 24) einen zugehörigen, sich im Wesentlichen in vertikaler Richtung erstreckenden Hubmast (26) enthält, an welchem ein in Längsrichtung des Hubmastes (26) hubbewegbarer und von diesem abstehender Querträgerarm (28) befestigt ist, der eine Plattformelement-Trägereinheit (30) aufweist, wobei die Plattformelemente (22, 24) jeweils an einer zugehörigen Plattformelement-Trägereinheit (30) um eine im Wesentlichen horizontale Achse schwenkbewegbar gelagert sind.

5. Ladevorrichtung nach Anspruch 4,
**dadurch gekennzeichnet,**
**dass** die Plattformelement-Trägereinheiten (30) jeweils einen sich im Wesentlichen in vertikaler Richtung erstreckenden und um eine im Wesentlichen vertikale Achse schwenkbewegbaren Trägermast (32) enthalten, der an dem zugehörigen Querträgerarm (28) angelenkt ist.

6. Ladevorrichtung nach Anspruch 5,
**dadurch gekennzeichnet,**
**dass** die Plattformelement-Trägereinheiten (30) jeweils einen sich im Wesentlichen in horizontaler Richtung erstreckenden, vom zugehörigen Trägermast (32) abstehenden Zapfen (34) aufweisen, an welchem das zugehörige Plattformelement (22, 24) um die Zapfenlängsachse zwischen einer Vertikalstellung (36) und einer Horizontalstellung (38) schwenkbewegbar befestigt ist.

7. Ladevorrichtung nach Anspruch 6,
**dadurch gekennzeichnet,**
**dass** die Plattformelemente (22, 24) relativ zu den zugehörigen Zapfen (34) lagebewegbar sind zur variablen Einstellung der Breite der Ladeplattform (16) in der Ladestellung (20).

8. Ladevorrichtung nach einem der vorhergehenden Ansprüche,
**dadurch gekennzeichnet,**
**dass** die Plattformelemente (22, 24) in der Ladestellung (20) mittels einer Kupplungseinrichtung (40) miteinander zerstörungsfrei trennbar verbunden sind.

9. Ladevorrichtung nach einem der Ansprüche 6 und 7, und 8,
**dadurch gekennzeichnet,**
**dass** die Kupplungseinrichtung (40) ein die zwei Zapfen (34) miteinander verbindendes Kupplungselement (42) und/oder mindestens ein die Plattformelemente (22, 24) direkt miteinander verbindendes Kupplungselement (44) aufweist.

10. Ladevorrichtung nach einem der vorhergehenden Ansprüche,
**dadurch gekennzeichnet,**
**dass** die Plattformelemente (22, 24) an ihren Enden jeweils mit schwenkbewegbaren Brückenelementen (46) versehen sind.

11. Ladevorrichtung nach einem der vorhergehenden Ansprüche,
**dadurch gekennzeichnet,**
**dass** die Verstelleinrichtung (14) ein vollautomatisiertes oder ein teilautomatisiertes oder ein manuell betätigbares Antriebssystem (48) zur Durchführung einer Schwenk- und/oder einer Hubbewegung aufweist.

12. Ladevorrichtung nach Anspruch 11,
**dadurch gekennzeichnet,**
**dass** das Antriebssystem (48) mindestens ein Antriebsaggregat in Form eines Hydraulikaggregats (50) für eine Hubeinrichtung (52) aufweist.

13. Ladevorrichtung nach Anspruch 11 oder 12,
**dadurch gekennzeichnet,**
**dass** das Antriebssystem (48) mindestens ein Antriebsaggregat (49) in Form eines Kugelgewindetriebs (58) für eine Hubeinrichtung (52) aufweist.

14. Ladevorrichtung nach einem der Ansprüche 11 bis 13,
**dadurch gekennzeichnet,**
**dass** das Antriebssystem (48) mindestens ein Antriebsaggregat in Form eines Zahnriementriebs (56) für eine Hubeinrichtung (52) aufweist.

15. Ladevorrichtung nach einem der Ansprüche 11 bis 14,
**dadurch gekennzeichnet,**
**dass** das Antriebssystem (48) mindestens ein Antriebsaggregat in Form eines Rollenkettentriebs (56) für eine Hubeinrichtung (52) aufweist.

16. Ladevorrichtung nach einem der Ansprüche 11 bis 15,
**dadurch gekennzeichnet,**
**dass** das Antriebssystem (48) mindestens ein Antriebsaggregat (49) in Form einer Seilwinde (60) für eine Hubeinrichtung (52) aufweist.

17. Ladevorrichtung nach Anspruch 4 und einem der Ansprüche 12 bis 16,
**dadurch gekennzeichnet,**
**dass** die Hubeinrichtung (52) für jedes Plattformelement (22, 24) einen zugehörigen Laufwagen (62) aufweist, der mit dem Hubmast (26) verschiebebeweglich und mit dem Querträgerarm (28) gelenkbeweglich verbunden ist.

18. Ladevorrichtung nach den Ansprüchen 12 und 17,
**dadurch gekennzeichnet,**
**dass** die Laufwagen (62) jeweils mit einem zugehörigen Seilstrang (64, 66) verbunden sind, wobei die Seilstränge (64, 66) jeweils an ihrem anderen Ende mit dem midestens einen Antriebsaggregat (49) verbunden sind.

19. Ladevorrichtung nach Anspruch 18,
**dadurch gekennzeichnet,**
**dass** die Seilstränge (64, 66) mit einem einzigen, gemeinsamen Antriebsaggregat (49) verbunden sind.

20. Ladevorrichtung nach einem der Ansprüche 4 bis 19,
**dadurch gekennzeichnet,**
**dass** die Verstelleinrichtung (14) ein Trägerportal (68) aufweist, das die zwei vertikalen Hubmaste (26) und einen zwischenangeordneten horizontalen Querträger (70) enthält, wobei mindestens ein Antriebsaggregat (49) im Bereich des Querträgers (70) angeordnet ist.

21. Ladevorrichtung nach einem der vorhergehenden Ansprüche,
**dadurch gekennzeichnet,**
**dass** die Plattformelemente (22, 24) mittels einer Halteeinrichtung (72) in der Ladestellung (20) ladestabil fixierbar sind.

22. Ladevorrichtung nach den Ansprüchen 5 und 21,
**dadurch gekennzeichnet,**
**dass** die Halteeinrichtung (72) jeweils für ein Plattformelement (22, 24) ein zugehöriges Halteseil oder eine Haltekette aufweist, die endseitig an dem entsprechenden Trägermast (32) und dem entsprechenden Plattformelement (22, 24) befestigt sind.

23. Transportfahrzeug (12) mit einer Ladevorrichtung (10) nach einem der vorhergehenden Ansprüche, wobei die Verstelleinrichtung der Ladevorrichtung (10) mit dem Transportfahrzeug (12) verbunden ist, und diese Verstelleinrichtung die Ladeplattform (16) der Ladevorrichtung (10) aus einer im Wesentlichen vertikalen Ruhestellung (18) in eine geeignete, höhenverstellbare Ladestellung (20) außerhalb des Transportfahrzeugs (12) und wieder zurück in die Ruhestellung (18) bewegbar ist,
**dadurch gekennzeichnet,**
**dass** die Ladeplattform (16) mindestens zwei Plattformelemente (22, 24) aufweist, die in Ruhestellung (18) innerhalb des Transportfahrzeugs (12) voneinander getrennt angeordnet und in Ladestellung (20) miteinander zerstörungsfrei trennbar verbunden sind.

24. Transportfahrzeug nach Anspruch 23,
**dadurch gekennzeichnet,**
**dass** die Plattformelemente (22, 24) in der Ruhestellung (18) voneinander beabstandet und im Wesentlichen senkrecht zu einer jeweils zugehörigen Innenseite einer Seitenwand (76) außerhalb eines Zugangsbereichs des Laderaums (13) des Transportfahrzeugs (12) angeordnet sind.

25. Transportfahrzeug nach Anspruch 23 oder 24,
**dadurch gekennzeichnet,**
**dass** die Ladevorrichtung (10) mindestens ein Antriebsaggregat (49) aufweist, das in einem unteren Bereich des Transportfahrzeugs (12) außerhalb des Laderaums (13) angeordnet ist.

26. Transportfahrzeug nach einem der Ansprüche 23 bis 25,
**dadurch gekennzeichnet,**
**dass** die Ladevorrichtung (10) eine Heckladevorrichtung ist.

27. Transportfahrzeug nach einem der Ansprüche 23 bis 26,
**dadurch gekennzeichnet,**
**dass** es ein Kleintransportfahrzeug ist.

28. Transportfahrzeug nach einem der Ansprüche 23 bis 27,
**dadurch gekennzeichnet,**
**dass** es eine Anhängerkupplung aufweist.

## Claims

1. Loading device for a transport vehicle (12), wherein the loading device (10) is provided with an adjusting device (14) connectable to the transport vehicle (12), by means of which a loading platform (16) of the operative loading device (10) can be moved from a substantially vertical inoperative position (18) into a suitable vertically adjustable loading position (20) outside the transport vehicle (12) and back into the inoperative position (18),
**characterised in that**
the loading platform (16) comprises two platform elements (22, 24) which are separated from each other in the inoperative position (18) and joined to each other while being capable of being non-destructively separated in the loading position (20).

2. Loading device according to claim 1,
**characterised in that**
the platform elements (22, 24) are arranged at a distance from each other in the inoperative position.

3. Loading device according to claim 1 or 2,
**characterised in that**
the adjusting device (14) is designed as a swivel-and-lift adjusting device.

4. Loading device according to any of the preceding claims,
**characterised in that**
the adjusting device (14) comprises for each platform element (22, 24) an associated mast (26) extending substantially in the vertical direction, to which is attached a transverse arm (28) movable in a lifting motion in the longitudinal direction of the mast (16) and projecting therefrom, which comprises a platform element support unit (30), each of the platform elements (22, 24) being movably mounted on an associated platform element support unit (30) to pivot about a substantially horizontal axis.

5. Loading device according to claim 4,
**characterised in that**
each of the platform element support units (30) comprises a support mast (32) extending substantially in the vertical direction and pivotable about a substantially vertical axis, which is hinged to the associated transverse arm (28).

6. Loading device according to claim 5,
**characterised in that**
each of the platform element support units (30) comprises a journal (34) extending substantially in the horizontal direction and projecting from the associated support mast (32), on which the associated platform element (22, 24) is movably mounted to pivot about the longitudinal axis of the journal between a vertical position (36) and a horizontal position (38).

7. Loading device according to claim 6,
**characterised in that**
the platform elements (22, 24) are positionally movable relative to the associated journals (34) for the variably adjustment of the width of the loading platform (16) in the loading position (20).

8. Loading device according to any of the preceding claims,
**characterised in that**
the platform elements (22, 24) are joined to each other in pairs in the loading position (20) by means of a coupling device (40) while being capable of being non-destructively separated.

9. Loading device according to any of claims 6, 7 and 8,
**characterised in that**
the coupling device (40) comprises a coupling element (42) joining the two journals (34) to each other and/or at least one coupling element (44) joining the platform elements (22, 24) directly to each other.

10. Loading device according to any of the preceding claims,
**characterised in that**
the platform elements (22, 24) are provided with pivotable bridging elements (46) at their ends.

11. Loading device according to any of the preceding claims,
**characterised in that**
the adjusting device (14) comprises a fully or semi-automated or manually operated drive system (48) for performing a swivel and/or lifting motion.

12. Loading device according to claim 11,
**characterised in that**
the drive system (48) comprises at least one drive unit in the form of a hydraulic power pack (50) for a lifting device (52).

13. Loading device according to claim 11 or 12,
**characterised in that**
the drive system (48) comprises at least one drive unit (49) in the form of a ball-type linear drive (58) for a lifting device (52).

14. Loading device according to any of claims 11 to 13,
**characterised in that**
the drive system (48) comprises at least one drive unit in the form of a synchronous belt drive (56) for a lifting device (52).

15. Loading device according to any of claims 11 to 14,
**characterised in that**
the drive system (48) comprises at least one drive unit in the form of a roller chain drive (56) for a lifting device (52).

16. Loading device according to any of claims 11 to 15,
**characterised in that**
the drive system (48) comprises at least one drive unit (49) in the form of a cable winch (60) for a lifting device (52).

17. Loading device according to claim 4 and any of claims 12 to 16,
**characterised in that**
the lifting device (52) comprises for each platform element (22, 24) an associated trolley (62) joined to the mast (26) in a manner capable of traversing motion and to the transverse arm (28) in a manner capable of pivoting motion.

18. Loading device according to claims 12 and 17,
**characterised in that**
each of the trolleys (62) is joined to an associated cable strand (64, 66), the other ends of each cable strand (64, 66) being joined to the at least one drive unit (49).

19. Loading device according to claim 18,
**characterised in that**
the cable strands (64, 66) are joined to a single common drive unit (49).

20. Loading device according to any of claims 4 to 19,
**characterised in that**
the adjusting device (14) comprises a support gantry (68) which includes two vertical masts (26) of the at least two platform elements and a horizontal crossbeam (70) disposed in between, at least one drive unit (49) being located in the region of the crossbeam (70).

21. Loading device according to any of the preceding claims,
**characterised in that**
the platform elements (22, 24) are locatable in a stable manner by means of a retaining device (72) in the loading position (20).

22. Loading device according to claims 5 and 21,
**characterised in that**
the retaining device (72) comprises for each platform element (22, 24) an associated retaining cable or a retaining chain, the ends of which are attached to the respective support mast (32) and to the respective platform element (22, 24).

23. Transport vehicle (12) with a loading device (10) according to any of the preceding claims, wherein the adjusting device of the loading device (10) is joined to the transport vehicle (10) and the adjusting device is capable of moving the loading platform (16) of the loading device (10) from a substantially vertical inoperative position (18) into a suitable vertically adjustable loading position (20) outside the transport vehicle (12) and back into the inoperative position (18),
**characterised in that**
the loading platform (16) comprises at least two platform elements (22, 24) which are separated from each other in the inoperative position (18) and joined to each other while being capable of being non-destructively separated in the loading position (20).

24. Transport vehicle according to claim 23,
**characterised in that**
the platform elements (22, 24) are arranged at a distance from each other in the inoperative position (18) and substantially at right angles to an associated inner side of a side wall (76) outside of an access region of the cargo area (13) of the transport vehicle (12).

25. Transport vehicle according to claim 23 or 24,
**characterised in that**
the loading device (10) comprises at least one drive unit (49) disposed in a lower region of the transport vehicle (12) outside the cargo area (13).

26. Transport vehicle according to any of claims 23 to 25,
**characterised in that**
the loading device (10) is a rear loading device.

27. Transport vehicle according to any of claims 23 to 26,
**characterised in that**
it is a light transport vehicle

28. Transport vehicle according to any of claims 23 to 27,
**characterised in that**
it comprises a trailer coupling.

## Revendications

1. Dispositif de chargement (10) pour un véhicule de transport (12), ledit dispositif de chargement (10) présente un dispositif de réglage (14) pouvant être relié au véhicule de transport (12), au moyen duquel une plateforme de chargement (16) du dispositif de chargement (10) prêt à fonctionner peut être déplacée d'une position de repos (18) essentiellement verticale dans une position de chargement (20) appropriée, réglable en hauteur à l'extérieur du véhicule de transport (12) et replacée dans la position de repos (18), **caractérisé en ce que** la plateforme de chargement (16) présente deux éléments de plateforme (22, 24) qui sont séparés l'un de l'autre en position de repos (18) et sont reliés l'un à l'autre de manière séparable sans détérioration.

2. Dispositif de chargement selon la revendication 1, **caractérisé en ce que** les éléments de plateforme (22, 24) sont espacés l'un de l'autre dans une position de repos (18).

3. Dispositif de chargement selon la revendication 1 ou 2, **caractérisé en ce que** le dispositif de réglage (14) est formé en tant que dispositif de réglage élévateur et pivotant.

4. Dispositif de chargement selon l'une quelconque des revendications précédentes, **caractérisé en ce que** le dispositif de réglage (14) comprend pour chaque élément de plateforme (22, 24) un mât de levage (26) associé s'étendant essentiellement à la verticale, sur lequel est fixé un bras transversal (28) espacé de celui-ci et pouvant se déplacer par levage dans la direction longitudinale du mât de levage (26), qui présente une unité de support (30) d'élément de plateforme, chacun des éléments de plateforme (22, 24) étant placé sur une unité de support d'élément de plateforme (24) associée de façon à pouvoir pivoter autour d'un axe essentiellement horizontal.

5. Dispositif de chargement selon la revendication 4, **caractérisé en ce que** les unités support (30) de l'élément de plateforme comprennent chacune un mât porteur (32) s'étendant essentiellement à la verticale et pouvant pivoter autour d'un axe essentiellement vertical qui est articulé sur le bras de support transversal (28) associé.

6. Dispositif de chargement selon la revendication 5, **caractérisé en ce que** les unités support (30) d'élément de plateforme présentent chacune un tenon à distance du mât porteur (32), s'étendant essentiellement à l'horizontale, sur lequel l'élément de plateforme (22, 24) associé est fixé de manière à pouvoir pivoter autour de l'axe longitudinal du tenon entre une position verticale (36) et une position horizontale (38).

7. Dispositif de chargement selon la revendication, **caractérisé en ce que** les éléments de plateforme (22, 24) peuvent se déplacer par rapport aux tenons associés (34) permettant ainsi le réglage variable de la largeur de la plateforme de chargement (16) dans la position de chargement (20).

8. Dispositif de chargement selon l'une quelconque des revendications précédentes, **caractérisé en ce que** les éléments de plateforme (22, 24) sont reliés les uns aux autres de manière séparable sans détérioration dans la position de chargement (20) au moyen d'un dispositif d'accouplement (40).

9. Dispositif de chargement selon l'une quelconque des revendications 6, 7 et 8, **caractérisé en ce que** le dispositif d'accouplement (40) présente un élément d'accouplement reliant ensemble les deux tenons (34) et / ou au moins un élément d'accouplement (44) reliant directement ensemble les éléments de plateforme (22, 24).

10. Dispositif de chargement selon l'une quelconque des revendications précédentes, **caractérisé en ce que** les éléments de plateforme (22, 24) sont pourvus à chacune de leur extrémité d'éléments de pont (46) pouvant pivoter.

11. Dispositif de chargement selon l'une quelconque des revendications précédentes, **caractérisé en ce que** le dispositif de réglage (14) présente un système d'entraînement (48) entièrement ou partiellement automatisé ou à actionnement manuel pour effectuer un mouvement de basculement et / ou de levage.

12. Dispositif de chargement selon la revendication 11, **caractérisé en ce que** le système d'entraînement (48) présente au moins un groupe d'entraînement se présentant sous la forme d'un groupe hydraulique (50) pour un dispositif de levage (52).

13. Dispositif de chargement selon la revendication 11 ou 12, **caractérisé en ce que** le système d'entraînement (48) présente au moins un groupe d'entraînement (49) se présentant sous la forme d'un organe d'entraînement à billes (58) pour un dispositif de levage (52).

14. Dispositif de chargement selon l'une quelconque des revendications 11 à à 13, **caractérisé en ce que** le système d'entraînement (48) présente au moins un groupe d'entraînement se présentant sous la forme d'un organe d'entraînement à courroie dentée (56) pour un dispositif de levage (52).

15. Dispositif de chargement selon l'une quelconque des revendications 11 à à 14, **caractérisé en ce que** le système d'entraînement (48) présente au moins un groupe d'entraînement dans un organe d'entraînement à chaînes à rouleaux (52) pour un dispositif de levage (52).

16. Dispositif de chargement selon l'une quelconque des revendications 11 à à 15, **caractérisé en ce que** le système d'entraînement (48) présente au moins un groupe d'entraînement se présentant sous la forme d'un treuil à câble (60) pour un dispositif de levage (52).

17. Dispositif de chargement selon la revendication 4 et selon l'une quelconque des revendications 12 à 16, **caractérisé en ce que** le dispositif de levage (52) présente pour chaque élément de plateforme (22, 24) un chariot (62) associé qui est relié au bras de support (28) transversal par une articulation et au mât de levage (26) de manière à pouvoir coulisser.

18. Dispositif de chargement selon les revendications 12 et 17, **caractérisé en ce que** chacun des chariots (62) est relié à un brin de câble (64, 66) associé, lesdits brins de câble (64, 66) étant chacun reliés à leur autre extrémité à l'au moins un groupe d'entraînement (49).

19. Dispositif de chargement selon la revendication 18, **caractérisé en ce que** les brins de câble (64, 66) sont reliés à un unique groupe d'entraînement (49) commun.

20. Dispositif de chargement selon l'une quelconque des revendications 4 à 19, **caractérisé en ce que** le dispositif de réglage (14) présente un portique porteur (68) qui comprend les deux mâts de levage (26) verticaux et une traverse (70) horizontale intercalée, un groupe d'entraînement (49) étant au moins disposé dans la zone de la traverse (70).

21. Dispositif de chargement selon l'une quelconque des revendications précédentes, **caractérisé en ce que** les éléments de plateforme (22, 24) peuvent être fixés au moyen d'un dispositif de retenue (72) dans la position de chargement (20) de manière stable.

22. Dispositif de chargement selon les revendications 5 et 21, **caractérisé en ce que** le dispositif de retenue (72) présente à chaque fois pour un élément de plateforme (22, 24) un brin de retenue associé ou une chaîne de retenue qui sont fixés à une extrémité du mât porteur (32) correspondant et à l'élément de plateforme (22, 24) correspondant.

23. Véhicule de transport (12) muni d'un dispositif de chargement (10) selon l'une quelconque des revendications précédentes, le dispositif de réglage du dispositif de chargement (10) étant relié au véhicule de transport (12), et ledit dispositif de réglage peut déplacer la plateforme de chargement (16) du dispositif de chargement (10) d'une position de repos (18) essentiellement verticale dans une position de chargement (20) appropriée, réglable en hauteur à l'extérieur du véhicule de transport (12) et la replace dans la position de repos (18), **caractérisé en ce que** la plateforme de chargement (16) présente au moins deux éléments de plateforme (22, 24) qui dans la position de repos (18) sont séparés l'un de l'autre à l'intérieur du véhicule de transport (12) et dans la position de chargement (20) sont reliés l'un à l'autre de manière à pouvoir être séparés sans détérioration.

24. Dispositif de chargement selon la revendication 23, **caractérisé en ce que** les éléments de plateforme (22, 24) sont éloignés les uns des autres dans la position de repos (18) et disposés essentiellement verticalement par rapport à chaque côté intérieur associé d'une paroi (16) à l'extérieur d'un des compartiments (13) de marchandises du véhicule de transport (12).

25. Dispositif de chargement selon l'une quelconque des revendications 23 à 24, **caractérisé en ce que** le dispositif de chargement (10) présente au moins un groupe d'entraînement (49) qui est disposé dans une région inférieure du véhicule de transport (12) à l'extérieur du compartiment de marchandises (13).

26. Véhicule de transport selon l'une quelconque des revendications 23 à 25, **caractérisé en ce que** le dispositif de chargement (10) est un dispositif de chargement arrière.

27. Véhicule de transport selon l'une quelconque des revendications 23 à 26, **caractérisé en ce qu'**il s'agit d'un petit véhicule de transport.

28. Véhicule de transport selon l'une quelconque des revendications 23 à 27, **caractérisé en ce qu'**il présente une attache de remorque.
